(19) **Europäisches Patentamt / European Patent Office / Office européen des brevets**

(11) **EP 1 486 807 B1**

(12) # EUROPEAN PATENT SPECIFICATION

(45) Date of publication and mention
of the grant of the patent:
**19.09.2007   Bulletin 2007/38**

(51) Int Cl.:
***G02B 6/28*** *(2006.01)*      ***G02F 1/035*** *(2006.01)*

(21) Application number: **03744389.2**

(22) Date of filing: **14.03.2003**

(86) International application number:
**PCT/ES2003/000122**

(87) International publication number:
**WO 2003/079080 (25.09.2003 Gazette 2003/39)**

(54) **MULTIPLE DELAY LINE BASED ON AN AWG AND DIFFERENT SECTIONS OF A DISPERSIVE OPTICAL MEDIUM**

MEHRFACH-VERZÖGERUNGSLEITUNG AUF DER BASIS EINES AWG UND VERSCHIEDENE ABSCHNITTE EINES DISPERSIVEN OPTISCHEN MEDIUMS

LIGNE A RETARD MULTIPLE BASEE SUR UN AWG ET DIFFERENTS SECTEURS D'UN MOYEN OPTIQUE DE DISPERSION

(84) Designated Contracting States:
**AT BE BG CH CY CZ DE DK EE ES FI FR GB GR HU IE IT LI LU MC NL PT RO SE SI SK TR**

(30) Priority:  **15.03.2002   ES 200200631**

(43) Date of publication of application:
**15.12.2004   Bulletin 2004/51**

(73) Proprietor: **UNIVERSIDAD POLITECNICA DE VALENCIA**
**46022 Valencia (ES)**

(72) Inventors:
• **Marti Sendra, Javier**
**46022 Valencia (ES)**
• **Corral Gonzalez, Juan Luis**
**46022 Valencia (ES)**

• **Vidal Rodriguez, Borja**
**46022 Valencia (ES)**
• **Madrid Diaz, Daniel**
**46022 Valencia (ES)**

(74) Representative: **Temino Ceniceros, Ignacio**
**Abril Abogados**
**Amador de los Rios, 1 1**
**28010 Madrid (ES)**

(56) References cited:
**EP-A1- 0 591 042          WO-A1-01/33270**
**US-A- 5 793 907**

• **PATENT ABSTRACTS OF JAPAN & JP 2001 042375 A (NIPPON TELEGRAPH AND TELEPHONE CORPORATION) 16 February 2001**

Description

## OBJECT OF THE INVENTION

The present invention consists of a delay line based on an AWG (Arrayed Waveguide Grating or diffraction mesh with grouped waveguides) and different sections of a dispersive optical medium that allow a large number of delays, corresponding to a large number of optical carriers, to be simultaneously generated. The values of the multiple delays will depend on the specific wavelengths, on the separation between these and on the dispersion of the optical medium. The invention provides essential novel features and notable advantages for cost reduction with respect to structures known and used for similar purposes in the current state of the art.

The application of the present invention is in any field in which it is necessary to obtain a large number of delays for example, such as happens in the field of optical shaping of beams for antenna grouping, where the obtaining of different progressive delay subsets is basic for their operation. Other fields of application would be digital analogue optical converters, optical time division multiplexing (OTDM) or optical systems based on code multiplexing (CDMA).

## BACKGROUND TO INVENTION

Antenna grouping allows the formation of radiation patterns with features that cannot be obtained using simple antennas. Specifically, they allow functionalities such as beam-steering, beam shaping on dynamic low-point introduction based on amplitude control and the delay of the supply of the different elements that comprise the cluster. For this object they have been widely used in a large number of areas within the telecommunications field. The most common functionality of an antenna cluster is the orientation of the beam in different directions in space, which, in the case of a linear cluster with constant spacing, is achieved by means of the introduction of a progressive delay (delays that maintain a constant difference between adjacent elements of the cluster) between the different elements of the cluster.

Thanks to the proportional reaction that exists between the delay introduced in an electromagnetic wave and the corresponding phase difference for the frequency of this signal, it is usual to effect the control on the phase shifts undergone by the signals corresponding to each element of the grouping instead of on the delays. When the beam shaping must be done for different frequencies or for signals of significant bandwidth this proportionality between delays and phase shifts is no longer valid, giving rise to the well-known phenomenon of beam squint and obligating the use of delay lines.

Traditionally the control of antenna clusters has been carried out by means of radiofrequency (RF) base band processing. However, at high frequencies (millimetric wavelengths) and high bandwidths base band processing becomes unviable, and those proposed in RF present several disadvantages, among them, limited bandwidth, high losses and great complexity of interconnection, as the number of elements in the cluster increases. Furthermore, the RF solutions based on delay lines usually imply high volume, weight and complexity.

To solve the problems previously described in recent years different proposals for optical shaping of clusters have appeared, the classification field of this invention [1] — [4].

The beam optical shaping architectures among other advantages present low weight and size, immunity against electromagnetic interferences, and especially they allow wide instantaneous bandwidth to easily obtained and true delay operation (TTD, True Time Delay) which allows the beam to be steered independently of the frequency of operation.

At first the delays of the different optical architectures were effected by means of signal propagation through a given section of fibre [5]. Later the use of the fibre dispersion was proposed to simultaneously implement multiple delays [6] - [7]. The use of other dispersive means of propagation instead of different lengths of dispersive fibre has also been proposed, as is the case of diffraction networks with variable periodicity [8]. The limitations as regards bandwidth due to the dispersion inherent in delay lines based on dispersive elements, can be resolved with different optical modulations tolerant to dispersion [3] - [9].

As relevant background, it should be cited the following document:

The US Patent number 5,793,907: The apparatus proposed in this patent is based on obtaining a time delay profile from the propagation time delay that experiences one signal when it crosses different fiber lengths in the feedback lines of one AWG. Therefore, one AWG delay line such as the one proposed in D1 is needed for each antenna element. Unlike this, we propose the use of dispersive delay lines to feedback one AWG and use the dispersive time delay between a set of optical carriers instead of the propagation time delay. In this way, just a single multiple delay line (i.e. a single AWG with dispersive feedback lines) can be used to generate a time delay profile (which can be used, for instance, to optically control an antenna array).

US patent number 5.793.907 proposes a delay line based on an AWG. The proposal is based on a symmetric feedback configuration in an AWG (known as loop-back, that is to say, the feedback is made between an output port of the AWG and its corresponding input port) as had been previously proposed for its use as ADM *(Add-Drop Multiplexer)* (10] - [11].

In the aforementioned patent, the delays are obtained by means of sections of length such that the propagation of the signal retards the optical signal the time required. To steer the main beam of the radiation pattern it is necessary to achieve a progressive delay between the different elements of the cluster, which obligates a delay line to be introduced for each element of the cluster, so that, each delay line must increase the length of its sections of fibre to achieve a constant progressive delay.

Therefore, this delay line presents a serious disadvantage; it is necessary to replicate the structure for every element of the cluster, which can make the system unviable for large clusters in view of the high cost of the AWG.

**Bliographical references mentioned:**

[1] W. Ng, A. Walston, G. Tangonan, J. Newberg, J.J. Lee and N. Bernstein, "The First Demonstration of an optically Steered Microwave Phased Array Antenna Using True-Time Delay" Journal Lightwave Technology, vol. 9 pp. 1124-1131, September 1991.

[2] R.D. Esman, M.Y. Frankel, J.L. Dexter, L. Goldberg, M.G. Parent, "Fiber Optic Prism True Time delay Antenna Feed" IEEE Photonics Technology Letters, vol. 5, no. 11, pp. 1347-1349, November 1993.

[3] H. Zmuda, E.H. Toughlian, "Photonic Aspects of Modern Radar", Ed. Artech House, 1994.

[4] I. Frigyes and A.J. Seeds, "Optically Generated True-Time Delay in Phased-Array Antennas", IEEE Transactions on Microwave Theory and Techniques, vol. 43, no. 9, pp. 2378-2386, September 1995.

[5] A.P. Goutzoulis, D.K. Davies, "Hardware compresive 2-D fiber optic delay line architecture for time steering of phased array antennas" Applied Optics, vol. 29, no. 36, pp. 5353-5359 December 1990.

[6] R. Soref, "Optica1 Dispersion Technique for Time-Delay Beam Steering", Applied Optics, vol. 31, pp. 7395-7397, December 10, 1992.

[7] D. T. K. Tong and M. C. Wu, "A Novel Multiwavelength Optically Controlled Phased Array Antenna with a Programmable Dispersion Matrix", IEEE Photonics Technology Letters, vol. 8, no. 6, pp. 812-814, June, 1996.

[8] J.L. Corral, J. Marti, S. Regidor, J.M. Fuster, R. Laming, M.J. Cole, "Continuously Variable True Time Delay Optical Feeder For Phased Array Antenna Employing Chirped Fiber Gratings" IEEE Transactions on Microwave Theory and Techniques, vol. 45, no. 8, pp. 1531-1536, 1997.

[9] G.H. Smith, D Novak, Z. Ahmed "Novel technique for generation of optical SSB with carrier using a single MZM to overcome fiber chromatic dispersion", International Topical Meeting on Microwave Photonics, Kyoto (Japan) Paper PDP-2, December 1996.

[10] Y. Tachikawa Y. Inoue, M. Kawachi, H. Takahashi and K. Inoue, "Arrayed-Waveguide Grating Add-drop Multiplexer with Loop-back Optical Paths", Electronics Letters vol. 29, no. 24, pp. 2133-2134, November 1993.

[11] Y. Tachikawa and M. Kawachi, "Lightwave Transrouter based on Arrayed-waveguide Grating Multiplexer", Electronics Letters, vol. 30, no. 18, pp. 1504-1505, 1st. September 1994.

[12] M.K. Smit, "New Focusing and Dispersive planar component based on an Optical Phased Array" Electronics Letters, vol. 24, no. 7, pp.385-386, March 1988.

[13] C. Dragone, "An NxN Optical Multiplexer Using a Planar Arrangement of Two Star Couplers", IEEE Photonics Technology Letters, vol. 3, no. 9, pp. 812-815, September 1991.

[14] C. Dragone, C.A. Edwards and R.C. Kistler, "Integrated Optics NxN Multiplexer on Silicon", IEEE Photonics Technology Letters, vol. 3, no. 10, pp. 896-899, October 1991.

**SUMMARY OF THE INVENTION**

Specifically, the present invention combines the properties of commutation according to the wavelength of the AWG together with the wavelength periodicity of its performance and the capacity of an optical dispersive medium to differently retard different wavelengths.

More particularly, the invention proposes the use of an AWG in a feedback configuration (each optical signal propagates twice through the AWG) with sections of a dispersive optical medium, together with a source that could switch between different wavelength subsets (WDM, Wavelength Division Multiplex) and it might even combine different wavelengths of every subset. Within each subset the different wavelengths act so that the separation between them is equal to the spectral periodicity of the AWG (FSR, Free Spectral Range) so that, after all the wavelengths of the subset are introduced through a port of the AWG, all of them are routed towards the same output port. In the basic configuration of the delay line the selected output port connects by means of a given length of dispersive optical medium with a specific one of the inputs or outputs (that selected or a different one) of the AWG, so that the dispersive medium differently retards each of the wavelengths of the subset before passing again through the AWG and be routed towards the common output port. The relative delays between the different wavelengths will depend on the spectral separation between these and on the total dispersion of the dispersive medium. If each of the outputs of the AWG connects to a dispersive medium with different dispersion parameters, the selection of the suitable wavelengths subset will allow the values of the different delays associated with each optical carrier to be selected.

In addition, the multiple delay line subject of this invention obtains multiples delays by means of the routing of different optical carriers through the same section of dispersive optical medium, benefiting from the periodicity of the transmission response of the AWG. In the loop-back configuration, if through one input of the AWG different FSR separated optical carriers are introduced, all of them are routed towards the same output and therefore they will feedback to the AWG through the same input, range over, therefore, the same section. If this section corresponds to a dispersive medium such as might be a given length $L(m)$ of fibre with a constant dispersion D (ps/nm·m), two optical carriers that were separated $\Delta\lambda$(nm) would undergo a relative delay between both of value:

$$\Delta\tau(ps) = D(ps/nm\cdot m)\cdot L(m)\cdot \Delta\lambda(nm)$$

In this way, if as many wavelengths as the cluster has elements are introduced into the delay line, with a separation between them constant and equal to the FSR of the AWG, it is possible to introduce the required delay between carriers by means of adjustment of the total dispersion of each section of dispersive optical media that form the feedback, which, for the case of optical fibre with constant dispersion, is equivalent to adjusting the length of each section. At the output of the delay line, the different wavelengths will de-multiplex, so that each wavelength will feed to one element of the cluster. On establishing this one-to-one correspondence between wavelengths and elements of the cluster it is possible, in principle, to use a single AWG for the whole cluster, independently of its number of elements. In practice a limitation appears, due to the number of orders (number of channels in a FSR) available from the AWG.

Although the most usual embodiment of this invention would be the use of a subset of wavelengths FSR separated from each other, it would be possible to introduce the wavelengths with a separation that was not equal to the FSR of the AWG but rather at arbitrary multiples of this, so that multiple arbitrary delays of the simple delay are achieved, understanding by simple delay that which corresponds with that due to the dispersive effect between two wavelengths separated the FSR of the AWG. The simultaneous selection of one or several carriers of more than one of the subsets would even be possible, allowing a greater flexibility in the selection of the delays at the cost of greater complexity in the optical generation and de-multiplexing stages.

**BRIEF DESCRIPTION OF THE DRAWINGS**

These and other characteristics and advantages of the invention will be made more clearly evident from the following detailed description of a preferred form of embodiment, provided solely as an illustrative and non-limitative example, with reference to the accompanying drawings, in which:

Figure 1 shows the schematic layout of an integrated AWG, basic device of the delay line set forth herein.

Figure 2 is a detail of the free propagation region of that shown in the previous figure.

Figure 3 shows the schematic layout of the delay line. It relates to an AWG in what it is known as loop-back configuration. In contrast to previous proposals, the feedback is carried out with a dispersive optical medium.

Figure 4 shows the spectrums of the optical signals at the input of the delay line.

Figure 6 shows the schematic layout of the delay line in a fold-back configuration (feedbacks between AWG output ports) appropriate when a dispersive medium operating in reflection mode is used.

**DESCRIPTION OF THE PREFERRED EMBODIMENT**

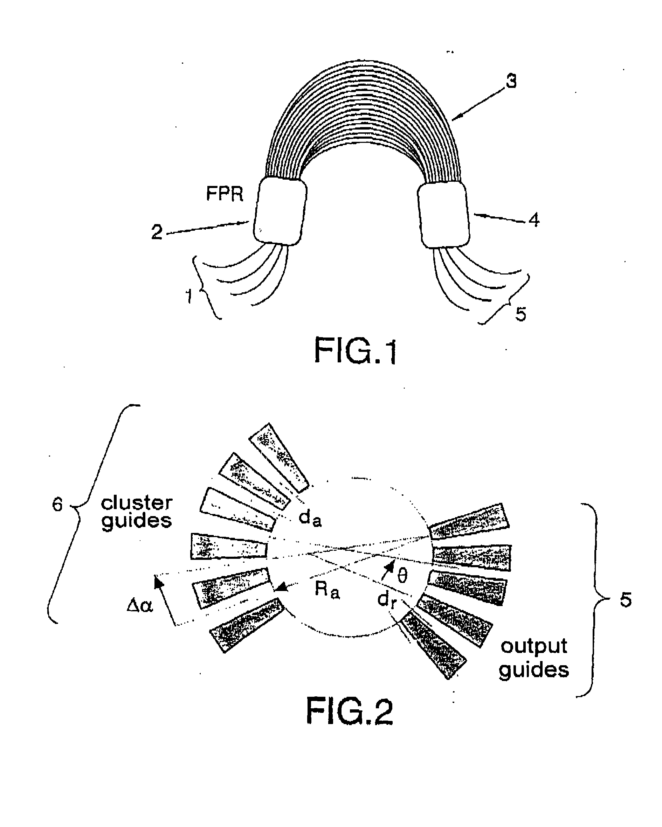

In order to perform the detailed description of the preferred embodiment of the present invention that follows, continuous reference will be made to the drawings of the Figures, throughout which the same numerical references for equal or similar parts have been used. Thus, Figure 1 refers to the principal component of the architecture, the AWG, formed by free propagation regions (2 and 4) joined by a cluster of waveguides of different lengths (3) and a set of access waveguides at each of the ends of the free propagation regions (1 and 5). Figure 2 is a detail of the free propagation region (2 and 4) of the AWG. In this, $\Delta\alpha$ represents the angle of divergence between the input and output waveguides, $R_a$ is the focal length, $d_a$ is the separation between waveguides of the cluster of guides (6), $d_r$ is the separation between waveguides of the output guides (5) and $\theta$ represents the resulting angle of dispersion of the phase difference between adjacent guides.

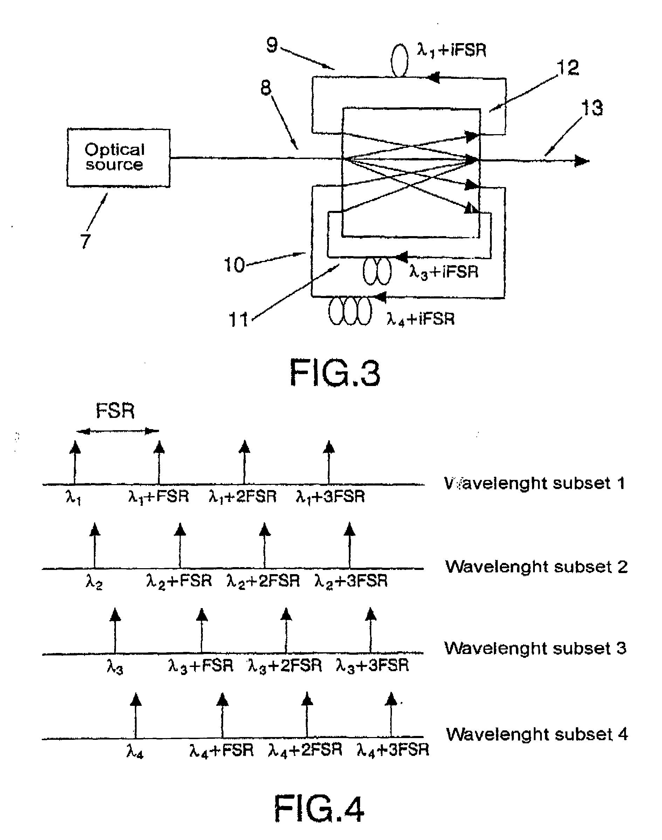

In addition, Figure 3 shows the multiple delay line, subject of this invention, in a loop-back configuration formed by an AWG (12) and as many sections of dispersive optical media (8, 9, 10 and 11) as the number AWG ports less one, a port that corresponds to the common input and output ports.

The full architecture consists of: the multiple delay line of Figure 3; the optical source, that must provide multiple wavelengths, as is shown in Figure 4; a data source and an electro-optic modulator, a de-multiplexer that separates the different wavelengths and assigns them to the corresponding photoreceptor to the appropiate element of the cluster. Since it is a reciprocal device this delay line can be used both in the transmission mode and in the reception mode of the antenna cluster, it being only necessary to add a series of separation and combination devices together with the corresponding optical-electrical and electrical-optical conversion stages; specifically it will be necessary to add: a de-multiplexer, a splitter that sends the multiple carriers in the route for transmission mode and in the route for the reception mode a combiner, a pair of diplexers, a number of electrical circulators a number of electro-optic modulators and a photoreceptor.

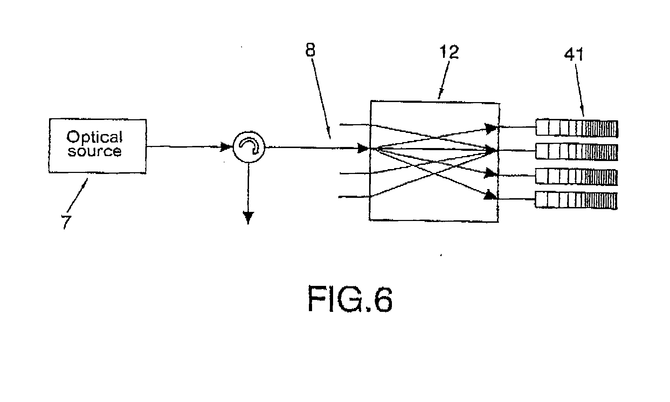

Figure 6 shows the multiple delay line, subject of this invention, in a fold-back configuration formed by an AWG and as many sections (41) of dispersive optical media, actuating in reflection mode, as the number of AWG ports.

The basic element of the multiple delay line proposed in this invention is the AWG schematically shown in Figure 1.

The operation of said device has been widely dealt with in the literature [12] - [14] being the following: the signal enters through one of the optical input guides (1) henceforward input ports. When the signal reaches the free propagation region (FPR Free Propagation Region) (2) it is no longer laterally confined and diverges. When it reaches the input opening the beam links to the waveguides cluster (3) and it propagates through the individual waveguides up to the output opening (5) in the second free propagation region (4).

The length of these guides is chosen so that the difference in length between adjacent guides is equal to a whole multiple of the central wavelength of the AWG. For this wavelength, the fields in the individual waveguides (3) will reach the output with the same phase, apart from a whole multiple of $2\pi$, and the field distribution that we had in the input opening will be reproduced in the output one. Therefore the divergent beam in the input opening is transformed in a convergent one, with equal amplitude and phase distribution to that of the output. As a consequence of the dispersion introduced by the grouping of waveguides (3) the output beam will incline and the focal point will move along the image plane.

According to that shown in Figure 2, by placing receiving waveguides (5) in suitable positions along the image plane we achieve spatial separation between the different wavelengths. That is, if the wavelength changes, the focal field of the AWG moves along the receiving waveguides. The frequency response of the different channels of the superposition of this field with the modal fields of the receiving guides being obtained. The periodic behaviour of the AWG is translated into that two FSR separated wavelengths imply a displacement of the focal field towards the same receiving waveguide, routing both wavelengths towards the same output.

In accordance with the invention and in the light of Figure 3, by means of the source (7) a set of wavelengths will be chosen, that will be introduced through the common input port of the delay line (8). Within the set there will be as many wavelengths as delays it is wished to generate, and the separation between them will correspond with multiples of the FSR of the AWG, so that all of them are routed towards the same output port. Therefore, all the wavelengths will go through the same section of dispersive medium. The choice of a section (with its full associated dispersion) and consequently of the large number of delays, is carried out optically by means of the choice of a specific subset of wavelengths. In the case that the dispersive medium is optical fibre with a constant dispersion, the expression (1) shows that a given delay will be introduced between the different wavelengths, due to the dispersion of the fibre. Although the dispersive medium will preferably have a linear delay response to the wavelength, any other response (for example such as: curved, parabolic or sawtooth) is possible and viable with the current state of the technology.

Because of the feedback configuration, the set of wavelengths will again enter one of the input ports of the AWG (1). Due to the symmetrical behaviour of the AWG, this will route all the wavelengths towards the common output port (13).

At the output of the multiple delay line a de-multiplexer is introduced, that separates each wavelength directing it towards a photoreceptor. The output of each photoreceptor will supply an element of the cluster. In this way, the multiple delay line has introduced, with a single AWG, a progressive delay between elements of the cluster, which allows its steering direction to be changed.

In case of using dispersive mediums that operate in reflection mode, as is the case of diffraction networks with variable periodicity (CFG, chirped fiber grating) the configuration of Figure 3 would be slightly modified, becoming as is shown in Figure 6, its operation being completely equivalent to that of Figure 3.

As regards the optical source (7), this must be capable of providing a spectrum similar to that shown one in Figure 4. Different ways of generating this type of spectrum exist, such as, for example, by means of commutation between different multi-wavelength lasers with an adequate separation between carriers.

Although the preferred implementation implies the selection of subsets of optical carriers with a spectral separation of whole multiples of the FSR, the simultaneous selection of one or several carriers of more than one of the subsets of Figure 4 is possible, allowing a greater flexibility in the selection of the delays at the cost of greater complexity in the optical generation and demultiplexing stages.

It is not considered necessary to make the content of this description more extensive in order that an expert in the matter may understand its scope and the advantages derived from the invention, likewise to develop and to put into practice its object.

Nevertheless, it must be understood that the invention has been described in accordance with a preferred embodiment of it, because of which it can be liable to modification without this implying any alteration in its basis, set out in the attached claims.

## Claims

1. Multiple delay line consisting of an AWG comprising an input and an output free propagation regions joined by an array of waveguides of different lengths, a main input port and a main output port, and other input and output ports connected to the input and output free propagation regions, the main input port accepting one or a plurality of subset (s) of optical signals with different wavelengths, the wavelengths of each subset being spaced apart by one or several time(s) the free spectral range of the AWG, the main output port delivering said optical signals time-delayed by a predetermined amount corresponding to a desired set of time delays, wherein each of the other output ports of the AWG is optically connected with an optical medium actuating in reflection mode or with its symmetrical other input port, **characterised in that** the optical connection between the other output ports and the optical media actuating in reflection mode or the other input ports is achieved by ways of sections of dispersive optical media, wherein at least two of the sections of the dispersive medium have different dispersions, the dispersions and lengths of each section being chosen so that the optical signals are time-delayed by the desired set of delays.

2. Multiple delay line according to claim 1, wherein the wavelength spacing in each subset of optical signal is a multiple of the free spectral range of the AWG.

3. Multiple delay line according to claim 1, wherein a plurality of subsets of optical signals is fed into the main input port, the wavelength spacing between any two optical signals of two different subsets being different than one or several time(s) the free spectral range of the AWG.

## Patentansprüche

1. Mehrfach-Verzögerungsleitung bestehend aus einem AWG (Arrayed Waveguide = strukturiertes Wellenleitergitter) mit freien. Ausbreitungsbereichen am Ein- und Ausgang, die mit einem Gitter von Wellenleitern verschiedener Längen, einem Haupteingangsport und einem Hauptausgangsport verbunden sind, und anderen Eingangs- und Ausgangsports, die an die freien Ausbreitungsbereiche des Ein- und Ausgangs angeschlossen sind. Der Haupteingangsport akzeptiert eine oder eine Vielzahl von Untergruppen von optischen Signalen mit verschiedenen Wellenlängen, wobei die Wellenlängen jeder Untergruppe getrennt strukturiert werden, und zwar ein Mal oder mehrere Male durch den freien Spektralbereich des AWG. Der Hauptausgangsport liefert die besagten optischen Signale zeitverzögert durch eine vorausbestimmte Menge, die einer gewünschten Gruppe von Zeitverzögerungen entspricht, wobei jeder der anderen Ausgangsports des AWG optisch mit einem optischen Medium verbunden ist und im Reflektionsmodus betrieben wird oder mit seinem anderen symmetrischen Eingangsport. Dies lässt sich so charakterisieren, dass die optische Verbindung zwischen den anderen Ausgangsports und den optischen Medien, die im Reflektionsmodus arbeiten, oder den anderen Eingangsports mit Hilfe von Teilen von dispersiven optischen Medien erreicht wird, wobei mindestens zwei von den Teilen des dispersiven Mediums verschiedene Dispersionen haben. Die Dispersionen und Längen von jedem Teil werden so ausgewählt, dass die optischen Signale durch die gewünschte Verzögerungsgruppe zeitverzögert werden.

2. Mehrfach-Verzögerungsleitung in Übereinstimmung mit dem Patentanspruch 1, wobei die Wellenlänge, die sich in jeder Untergruppe der optischen Signale befindet, ein Vielfaches des freien Spektralbereiches des AWG ist.

3. Mehrfach-Verzögerungsleitung in Übereinstimmung mit dem Patentanspruch 1, wobei eine Vielzahl von Untergruppen der optischen Signale dem Haupteingangsport zugeführt wird. Die Wellenlänge, die sich zwischen zwei beliebigen optischen Signalen von zwei verschiedenen Untergruppen befindet, unterscheidet sich ein oder mehrere Male von dem freien Spektralbereich des AWG.

## Revendications

1. Ligne à retard multiple consistant en un réseau sélectif planaire (AWG - Arrayed Waveguide) composé d'une région d'entrée et d'une région de sortie libres de propagation unies par une matrice de guides d'ondes de différentes longueurs, d'un port d'entrée principal et d'un port de sortie principal et d'autres ports d'entrée et de sortie connectés aux régions d'entrée et de sortie libres de propagation, le port d'entrée principal acceptant un ou plusieurs sous-groupes de signaux optiques de différentes longueurs d'ondes, les longueurs d'onde de chaque sous-groupe étant espacées d'une ou de plusieurs fois l'intervalle spectral libre de l'AWG, le port de sortie principal émettant les dits signaux optiques avec un retard d'une durée déterminée correspondant au groupe voulu de retards, où chacun des autres ports de sortie de l'AWG est optiquement connecté avec un support optique qui agit en mode réflexion ou avec son autre port d'entrée symétrique, **caractérisé par le fait que** la connexion optique entre les autres ports de sortie et les supports optiques agissant sur le mode réflexion ou les autres ports d'entrée s'obtient au moyen de sections de supports optiques dispersifs, où au moins deux des sections du support dispersif ont différentes dispersions, les dispersions et longueurs de chaque section étant choisies de sorte que les signaux optiques soient retardés selon le groupe voulu de retards.

2. Ligne à retard multiple conformément à la revendication 1, où l'espacement des longueurs d'ondes dans chaque sous-groupe de signal optique est un multiple de l'intervalle spectral libre de l'AWG.

3. Ligne à retard multiple conformément à la revendication 1, où plusieurs sous-groupes de signaux optiques sont alimentés dans le port d'entrée principal, l'espacement des longueurs d'onde entre deux signaux optiques ou deux sous-groupes différents étant d'une ou de plusieurs fois différent de l'intervalle spectral libre de l'AWG.

FIG.1

FIG.2

FIG.3

FIG.4

FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5793907 A

**Non-patent literature cited in the description**

- **W. NG ; A. WALSTON ; G. TANGONAN ; J. NEWBERG ; J.J. LEE ; N. BERNSTEIN.** The First Demonstration of an optically Steered Microwave Phased Array Antenna Using True-Time Delay. *Journal Lightwave Technology,* September 1991, vol. 9, 1124-1131
- **R.D. ESMAN ; M.Y. FRANKEL ; J.L. DEXTER ; L. GOLDBERG ; M.G. PARENT.** Fiber Optic Prism True Time delay Antenna Feed. *IEEE Photonics Technology Letters,* November 1993, vol. 5 (11), 1347-1349
- **H. ZMUDA ; E.H. TOUGHLIAN.** Photonic Aspects of Modern Radar. 1994
- **I. FRIGYES ; A.J. SEEDS.** Optically Generated True-Time Delay in Phased-Array Antennas. *IEEE Transactions on Microwave Theory and Techniques,* September 1995, vol. 43 (9), 2378-2386
- **A.P. GOUTZOULIS ; D.K. DAVIES.** Hardware compresive 2-D fiber optic delay line architecture for time steering of phased array antennas. *Applied Optics,* December 1990, vol. 29 (36), 5353-5359
- **R. SOREF.** Optica1 Dispersion Technique for Time-Delay Beam Steering. *Applied Optics,* 10 December 1992, vol. 31, 7395-7397
- **D. T. K. TONG ; M. C. WU.** A Novel Multiwavelength Optically Controlled Phased Array Antenna with a Programmable Dispersion Matrix. *IEEE Photonics Technology Letters,* June 1996, vol. 8 (6), 812-814

- **J.L. CORRAL ; J. MARTI ; S. REGIDOR ; J.M. FUSTER ; R. LAMING ; M.J. COLE.** Continuously Variable True Time Delay Optical Feeder For Phased Array Antenna Employing Chirped Fiber Gratings. *IEEE Transactions on Microwave Theory and Techniques,* 1997, vol. 45 (8), 1531-1536
- **G.H. SMITH ; D NOVAK ; Z. AHMED.** Novel technique for generation of optical SSB with carrier using a single MZM to overcome fiber chromatic dispersion. *International Topical Meeting on Microwave Photonics,* 02 December 1996
- **Y. TACHIKAWA ; Y. INOUE ; M. KAWACHI ; H. TAKAHASHI ; K. INOUE.** Arrayed-Waveguide Grating Add-drop Multiplexer with Loop-back Optical Paths. *Electronics Letters,* November 1993, vol. 29 (24), 2133-2134
- **Y. TACHIKAWA ; M. KAWACHI.** Lightwave Transrouter based on Arrayed-waveguide Grating Multiplexer. *Electronics Letters,* 01 September 1994, vol. 30 (18), 1504-1505
- **M.K. SMIT.** New Focusing and Dispersive planar component based on an Optical Phased Array. *Electronics Letters,* March 1988, vol. 24 (7), 385-386
- **C. DRAGONE.** An NxN Optical Multiplexer Using a Planar Arrangement of Two Star Couplers. *IEEE Photonics Technology Letters,* September 1991, vol. 3 (9), 812-815
- **C. DRAGONE ; C.A. EDWARDS ; R.C. KISTLER.** Integrated Optics NxN Multiplexer on Silicon. *IEEE Photonics Technology Letters,* October 1991, vol. 3 (10), 896-899